# EUROPEAN PATENT SPECIFICATION

(11) **EP 1 608 506 B1**
(45) Date of publication and mention of the grant of the patent: **21.05.2008**
(21) Application number: 04723175.8
(22) Date of filing: 25.03.2004
(51) Int. Cl.: B32B 27/32, C08L 23/14

(54) **MULTILAYER FILMS**
MEHRLAGENFILME
FILMS MULTICOUCHES

(30) Priority: 31.03.2003 EP 03007293
(43) Date of publication of application: 28.12.2005
(73) Proprietor: Borealis Technology Oy, 06201 Porvoo (FI)
(72) Inventor: ACKERMANS, Nina, B-3980 Tessenderlo (BE); EMIG, Jürgen, A-8160 Weiz (AT)
(74) Representative: Grünecker, Kinkeldey, Stockmair & Schwanhäusser Anwaltssozietät
(86) International application number: PCT/EP2004/003161
(87) International publication number: WO 2004/087419

(56) References cited:
- EP-A- 0 719 829
- WO-A-02/051912
- US-B1- 6 511 755

## Description

The invention relates to multilayer films having good optical properties, especially high gloss and low haze, low sealing temperatures and for high processing speeds.

Multilayer films for packaging applications usually consist of at least 3 layers, from which the polymers used in the exterior (skin) layers are selected to give
- low sealing temperature (referred to as SIT = seal initiation temperature) to allow good converting on fast running packaging machines
- high melting temperature (at least > 128°C) to give good processability on a BOPP line. A BOPP process (**B**iaxially **O**riented **P**oly**P**ropylene film) consists of an extrusion part, an orientation in machine direction (MDO) and an orientation in transverse direction (TDO). In MDO, the film is running on a heated set of rolls. The stretching occurs due to a difference in speed between the last and the first rolls. The temperature of these rolls generally is between 120 -130 **°**C**,** but occasionally some lines are using higher temperatures. Fast running lines require higher temperatures in order to allow the stretching (higher energy input is needed to stretch the homopolymer core of the film). Some lines are working with temperatures up to 137°C. At such a temperature a significant fraction of the polymer in the exterior layer is already molten and can create sticking to the rolls which causes poor haze and operational problems (ultimately breaks).
- excellent gloss and low haze
- low blocking to allow easy converting (printing, lamination, runnability on packaging machines). In all of these processes the film is moving against (warm) metal surfaces. A sticky film surface means speed limitations and operational problems in the converting process.

Typical polymers used for those exterior layers are e.g. C₃C₄C₂-terpolymers as described in WO 98/58971. Terpolymers with low ethylene (C₂ ~ 1 wt%) and a medium 1-butene content (C₄ ∼ 9 wt%), have a melting point of about 130 - 132 °C and allow a SIT in the range of 102 -108 °C. Measures to achieve a still lower SIT-value, e.g. with a higher comonomer content, would lead to too low melting temperatures.

Lower SIT values, without a reduction of the melting range, can be achieved as described in JP 54-028351 by using a compound of a C₃C₄C₂-terpolymer with a crystalline poly-1-butene.

WO 02051912 discloses a layer of a multilayered material for thermoforming comprising a propylene polymer composition containing at least 0,8 wt.% of ethylene and one or more C₄-C₁₀ α-olefin comonomers.

JP 54-060348 discloses a composition of an ethylene-propylene copolymer and poly-1-butene for giving low-temperature sealing temperatures to polypropylene films.

EP 679 696 discloses compositions of C₃C₄-copolymers or C₃C₄C₂-terpolymers with butene-copolymers and their use as sealing layers.

This allows to reduce the SIT below 80°C but to maintain a melting temperature of above 130°C. These films are however unsatisfactory regarding their optical parameters, especially gloss.

It is therefore the object of the invention to provide a multilayer film having good or improved optical parameters, a low seal initiation temperature (SIT) and a reduced blocking load, which allows the use at high converting speeds.

The above object is achieved by an oriented multilayer film, where at least one exterior layer comprises
90 - 99.9 wt% of a polypropylene composition, which is comprised of a propylene random copolymer containing
2 - 18 wt% of at least one of ethylene or a C₄-C₈ α-olefin and
less than 98 wt% propylene, and
0.1 -10.0 wt% of a modifier, which consists of a propylene homopolymer having an MFR > 100 g/10 min (230 °C, 2.16 kg).

Compared to multilayer films where at least one exterior layer is comprised of conventional propylene copolymers, the films according to the invention have a low SIT and comparable or improved optical properties (haze and gloss). The polymer material of the exterior layer has a high melting temperature (i.e. above 130 °C) and a low blocking load and it is therefore possible to process these films with high speed on today's high-temperature machines.

Overall, this is achieved by a polymer material of which the exterior layer is comprised, which contains a low viscosity propylene homopolymer in addition to the propylene random copolymer.

Satisfactory results are achieved when the polypropylene homopolymer of the modifier has an MFR > 100 g/10 min, preferably > 300 g/10 min, more preferably > 500 g/10 min, most preferably > 700 g/10 min (230 °C, 2.16 kg). The effect of the homopolymer with high MFR seems to be based on the fact that during extrusion, the low viscosity homopolymer flows to the surface, where it is "masking" the more sticky random copolymer. This can be regarded as enriching the surface with homopolymer, which results in less stickiness (less blocking) of the entire exterior layer without deterioration of the sealing properties. Thereby, the two components are acting synergistically together, where the terpolymer provides for high melting temperature combined with rather low SIT, while the low viscosity homopolymer provides for still higher melting temperature and retains the low SIT.

The amount of modifier may vary within a broad range, i.e. from 0.1 to 10.0 wt%. White an effect of the addition of the homopolymer is already noticeable at the lower end of the above concentration interval, it is preferred for the amount of propylene homopolymer in the exterior layer to be at least 0.5 wt%, where the supposed effect of "masking" the terpolymer is already more pronounced. At a homopolymer concentration above 10.0 wt% the SIT is becoming too high. For most applications, the effect of addition of the propylene homopolymer is sufficiently pronounced with an amount of homopolymer of up to 7.0 wt%.

For oriented films, i.e. mono- or biaxially oriented films, an amount of 0.5 - 4.0 wt%, preferably of up to 3.0 wt%, of modifier is usually sufficient.

According to an embodiment of the invention the polypropylene composition comprises more than 80 wt% of the propylene copolymer and up to 20 wt% of a copolymer which comprises a C₄-C₈-α-olefin and one of ethylene and propylene. A preferred α-olefin is 1-butene.

By adding a certain amount of an α-olefin ethylene or propylene copolymer, preferably a butene-ethylene or butene-propylene copolymer, it is possible to adjust the desired SIT. It is particularly possible to achieve SIT's < 80 °C. A disadvantage of the addition of an α-olefin ethylene or propylene copolymer is a deterioration of optical parameters of the films.

With the addition of propylene homopolymer the optical parameters can be restored in part or full, depending upon the amount of propylene homopolymer.

The preferred monomer concentration ranges for the C₄-C₈-α-olefin ethylene or propylene copolymer are from 80 - 99 mol% C₄-C₈-α-olefin and 1 - 20 mol% ethylene or propylene.

The propylene copolymer, of which the polypropylene composition of the exterior layer is comprised, may be any one of known propylene copolymers or terpolymers, which are conventionally used for exterior layers of multilayer films. In the most basic embodiment, these propylene copolymers contain 2 - 18 wt% of at least one of ethylene or a C₄-C₈ α-olefin, the remainder being propylene. In a preferred embodiment the propylene copolymer contains from 0.5 - 1.5 wt% ethylene and from 6.0 - 10.0 wt% C₄-C₈ α-olefin, the preferred C₄-C₈ α-olefin being 1-butene. This concentration range is preferred, because it offers the best compromise between a desirable low SIT and a desirable high melting temperature.

### Description of Production of Propylene Copolymer

The polymerization process for the production of the propylene copolymers according to the invention may be a continuous process or a batch process utilizing known methods and operating in liquid phase, optionally in the presence of an inert diluent, or in gas phase or by mixed liquid-gas techniques. The process is preferably carried out in the presence of a stereospecific catalyst system.

As catalyst any ordinary stereospecific Ziegter-Natta catalysts can be used. An essential component In those catalysts are solid catalyst components comprising a titanium compound having at least one titanium-halogen bond, an internal electron donor compound and a magnesium halide in active form as a carrier for both the titanium component and the donor compound. The catalysts can contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound. Additionally, an external electron donor is generally used.

To obtain the propylene copolymer, it is preferred to use a polymerization process based on at least one reactor and an optional second polymerization step comprising at least one gas phase reactor.

Before the catalyst system is used in the actual polymerisation process it is optionally prepolymerized with small amounts of α-olefins in order to enhance catalyst performance and to improve the morphology of the end product.

In the first step of the process the optionally prepolymerised catalyst system and a monomer mixture comprised of propylene, and at least one of ethylene and C₄-C₈ α-olefins is fed into a reactor. The C₄-C₈ α-olefin can be any one or mixtures of 1-butene, 1-pentene, 4-methyl-l-pentene, 1-hexene, 1-heptene or 1-octene. Particularly preferred is 1-butene. The amount of propylene can be 60 to 98 wt%, the amount of comonomer can be 2 to 40 wt%. For producing a terpolymer, the amount of ethylene can be from 0.2 to 2.0 wt% and the amount of C₄-C₈ α-olefin can be 4 to 25 wt%.

Polymerization can be carried out in the presence of the previously mentioned organoaluminium compound and an external donor compound at temperatures lower than 90 °C and pressures in the range of 10 to 90 bar, preferably 30 to 70 bar. The polymerization is carried out in such conditions that 50 to 100 wt%, preferably 75 to 99 wt% of the end product is polymerized in the first reactor.

Any metallocene catalyst capable of catalyzing the formation of a propylene copolymer can be used. A suitable metallocene catalyst comprises a metallocenelactivator reaction product impregnated In a porous support at maximum internal pore volume. The catalyst complex comprises a ligand which is typically bridged, and a transition metal of group IVa ... VIa , and an organoaluminium compound. The catalytic metal compound is typically a metal halide.

in the first polymerization step a copolymer is produced, in which the content of comonomer is in the range of from 2 to 18.0 wt%, preferably 2 to 10 wt%. For a terpolymer the ethylene content after the first step is in the range of from 0.2 to 2 wt%, preferably 0.2 to 1.5 wt%, the content of C₄-C₈ α-olefin is in the range of 4 to 15 wt%, preferably of 5 to 12 wt%. Hydrogen is added, when desired, into the first reactor for adjusting the molecular weight of polymer, as conventional.

After the polymerization is complete in the first reactor, the reaction medium is optionally transferred into a second reactor, which can be a gas phase reactor.

In the optional second reactor, 0 to 50 wt%, preferably 1 to 25 wt% of the final copolymer is formed. In the second reactor the polymerization can be carried out at a temperature of 60 to 90 °C and at a pressure higher than 5 bar, preferably higher than 10 bar. Optionally, propylene and other monomers can be added into the second reactor. Hydrogen can also be added into the gas phase reactor, if desired.

The precise control of the polymerization conditions and reaction parameters is within the state of the art. After the polymerization in the first and the optional second reactor is finished, the polymer product is recovered by conventional procedures.

The resulting polymer particles may be pelletised in a conventional compounding extruder with various additives, which are generally used in thermoplastic polymer compositions, such as stabilizers, antioxidants, acid neutralizing agents, ultraviolet absorbers, clarifying agents, antiblocking agents, antistatic agents, antifogging agents, etc.

The multilayer films according to the invention are preferable used for packaging applications, e.g. for food packaging like clear or white opaque film for biscuits, snacks and crisps, fresh vegetables; tobacco: cosmetics etc.

A further aspect of the invention relates to a film forming polymer composition which comprises
90 - 99.9 wt% of a polypropylene composition, which is comprised of a propylene random copolymer containing
2 - 18 wt% of at least one of ethylene or a C₄-C₈ α-olefin and less than 98 wt% propylene, and
0.1 -10.0 wt% of a modifier, which consists of a propylene homopolymer having an MFR > 100 g/10 min (230 °C, 2.16 kg).

This film forming polymer composition is utilizable in the production of the multilayer films according to the invention.

According to a preferred embodiment the polypropylene composition comprises more than 80 wt% of the propylene copolymer and up to 20 wt% of a copolymer which comprises a C₄-C₈-α-olefin and one of ethylene and propylene, a preferred α-olefin being 1-butene.

### Monoaxially oriented PP film (MOPP)

Based on a cast film, a solid-state orientation step below the melting temperature is applied before winding. The resulting films (used e.g. for adhesive tapes or packaging tapes) have a higher crystallinity and stiffness. A disadvantage of such films is the severe anisotropy of mechanical properties, the limited transparency caused by oriented crystals and a strong tendency to split in processing direction.

### Biaxially oriented PP film (BOPP)

Two main technologies are used for this process, which are described in detail in A. Ajji & M.M. Dumoulin, Biaxially oriented polypropylene (BOPP) process, in: J. Karger-Kocsis (Ed.) Polypropylene: An A-Z Reference, Kluwer, Dordrecht 1999, 60-67. Orientation and properties are determined by the draw ratio and details of the process; the films have generally the highest crystallinity and stiffness achievable.

### Measurement methods

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C.

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Gloss

Gloss was determined according to DIN 67530 on film samples (thickness 30 µm) at an angle of 60°.

### Haze

Haze was determined according to ASTM D 1003-92. Haze is defined as that percentage of light, which, in passing through a film, deviates from the incident beam more than 2.5 degrees on the average.

### Coefficient of friction (COF)

The method is based on ISO 8295 (1995) and determines the coefficients of starting and sliding friction of plastic film when sliding over itself or other substances. The coefficient of friction is determined as the ratio of the frictional force to the normal force, acting perpendicular to the two surfaces in contact. The coefficient of friction was determined on film samples with a thickness of 30 µm.

### DSC

Melting temperature (peak temperature) was measured with differential scanning calorimetry (DSC) by using a temperature increasing rate of 10°C/min, according to ISO/DIN 11357-3v.

### SIT

SIT is defined as the temperature at which a certain Seal Strength is reached. For the examples SIT 3N was determined, which is the temperature at which a seal strength of 2 N is reached.

### Description of the test method:

Heat sealing properties are measured on a J&B Universal sealing machine Type 3000. A long (> 800 mm length) film sample, with sample width 25.4 mm, is cut from the film. The sample is Installed between 2 clamps. A seal is applied under the following conditions:
- Flat sealing jaws
- Seal Pressure 0.1 N/mm²
- Seal Time 0.1 s
- Cool time 99 s
- Peel speed 1.0 mm/min
   This is repeated at different sealbar temperatures, which results in a sealing curve demonstrationg the seal s tregth a s function of temperature. From this curve the SIT is determined.

### Blocking load

The blocking load measures the force that is needed to "peel" 2 layers of film from each other. Prior to measurement the samples are pre-conditioned under load in an oven to simulate storage conditions on a reel.
- Samples (dimension 145 mm X 145 mm) are cut from the film.
- several samples are stacked (inside to outside) and placed in an oven at 60 °C for 24 hours. A load of 2286 grams is placed on top of the films during the preconditioning step.
- The samples are removed from the oven and allowed to cool during 2 hours at 23°C.
- Blocking force is the force that is needed to separate 2 films from each other. This is determined in the "Block-reblock tester Model D-9046 of Kayeness Inc. "
- 1 set of 2 films (inside to outside) is installed in the equipment. The bottom layer is fixed to the bottom plate and the upper layer is connected to an upper plate.
- The instrument measures the force that it needs to apply to the upper plate to separate the 2 film layers from eachother.

### Examples

### Base Materials

Polymer 1:
Terpolymer of Propylene with 1 wt% ethylene and 9 wt% 1-butene
MFR (230, 2.16) = 6.5 g/10 min
Tm = 130-131 °C

Polymer 2:
PP-Homopolymer
MFR (230, 2.16) = 35 g/10 min

Polymer 3:
PP-Homopolymer
MFR (230, 2.16) = 800 g/10 min

### Description of α-olefin-copolymer

Commercially available grades like those mentioned below can be used as the C4-C8-α-olefin copolymer with either ethylene or propylene as comonomer:
- Huntsman RT27340, RT2880
- Tafmer BL 027, BL 3080, BL 3110, BL2481, BL 3450
- Shell 8340, DP8310

### BOPP core layer material

Polymer 4:
PP-homopolymer
MFR (230, 2.16) = 3.2 g/10 min.

### Preparation of compositions for the examples

### Example 1 (Ex1):

A dry blend of 85.46 wt% of polymer 1 with 1.0 wt% polymer 3 and 12.5 wt% Tafmer BL3450 (ethylene content: 4 wt%) and 0.04 wt% Sylobloc S45 was pelletised in a conventional compounding line.

### Example 2 (Ex2):

A dry blend of 98.0 wt% of polymer 1 with 2.0 wt% polymer 3 was pelletized in a conventional compounding line.

### Comparative example 1 (CEx1):

A dry blend of 87.46 wt% of polymer 1 with 12.5 wt% Tafmer BL3450 and 0.04 wt% Sylobloc S45 was pelletized in a conventional compounding line.

### Comparative example 2 (CEx2):

A dry blend of 85.46 wt% of polymer 1 with 12.5 wt% Tafmer BL3450, 2.0 wt% and 0.04 wt% Sylobloc S45 was pelletized in a conventional compounding line.

### Comparative example 3 (CEx3):

To create a comparable product history, a pure sample of polymer 1 was molten and repelletised in a conventional compounding line.

### Production of BOPP films

The films according to the invention were produced in a tentering process with consecutive stretching in machine and transverse direction.

The BOPP process begins with the co-extrusion of a horizontal flat film onto a casting roll (chilled roll and/or cold water bath). The co-extruded film has a "ABA" layer-structure, where "A" is the exterior layer(s) and "B" is the core layer.

The extrudate is reheated to a temperature above the glass transition temperature Tg and below the melting point of the homopolymer (Tm). The warm extrudate (sheet) is passed through a longitudinal stretching unit, where it is oriented in the machine direction (MD).

After cooling the film passes through a tenter oven or a frame unit, where it is gripped along the edges by clamps. The damps are mounted on rails on both sides of the Tenter frame. The Tenter frame has a "V" -shaped configuration. As the distance between the rails increases at a constant angle, the film is stretched and becomes oriented in the cross machine or transverse direction (TD).

The films is finally passed into the annealing oven where the film is restrained in both directions, the film is cooled and the damps are removed. The film is edge trimmed and wound up onto mill rolls (between 6 and 10 m width).

**The following films were prepared**

**Table**

| | | | **Ex1** | **Ex2** | **CEx1** | **CEx2** | **CEx3** |
|---|---|---|---|---|---|---|---|
| ***Polymer 1*** | Terpolymer | % | 85,50 | 99,0 | 87,46 | 85,46 | 100 |
| ***Tafmer BL3450*** | Poly-1-butene | % | 12,5 | | 12,5 | 12,5 | |
| ***Antiblock*** | SiO2 | % | 0.04 | | 0,04 | 0,04 | |
| ***polymer 2*** | PP homopolymer 1 | % | | | | 2,0 | |
| ***polymer 3*** | PP homopolymer 2 | % | 2,0 | 1,0 | | | |
| **MFR PPhlgh flow** | 230/2,16 | g/10' | 800 | 800 | | 35 | - |
| **MFR pellets** | 230/2,16 | g/10' | 8.4 | 7,1 | 6.9 | 7,0 | 6,5 |
| **Melting peaks** | DSC | °C | 155 | 153 | | 152 | |
| | | | 133 | 132 | 132 | 133 | 132 |
| | | | 84 | | 82 | 83 | |
| | | | | | | | |

| **Results BOPP films 30µm ABA with 1µm sealing layers** | | | | | | | |
|---|---|---|---|---|---|---|---|
| **Blocking load** | | N | 9,3 | 2.8 | 10,1 | 9,9 | 3,7 |
| **COF** | static | - | 0.88 | 0,75 | 0.95 | 0.93 | 0.71 |
| | dynamic | - | 0,79 | 0,68 | 0.84 | 0.81 | 0.70 |
| **Optical properties** | gloss | % | 134 | 137 | 116 | 117 | 137 |
| | haze | % | 1.3 | 1.1 | 2,7 | 2.7 | 1,0 |
| **SIT** | 3 N | °C | 93 | 107 | 92 | 93 | 107 |

## Claims

1. Oriented multilayer film, where at least one exterior layer comprises
90 - 99.9 wt% of a polypropylene composition, which is comprised of a propylene random copolymer containing
2 - 18 wt% of at leasαt one of ethylene or a C₄-C₈ α-olefin and less than 98 wt% propylene, and
0.1 -10.0 wt% of a modifier, which consists of a propylene homopolymer having an MFR > 100 g/10 min (230 °C, 2.16 kg).

2. Multilayer film according to claim 1, **characterised in that** the propylene homopolymer has an MFR > 300 g/10 min, preferably 500 g/10min. more preferably > 700 g/10 min.

3. Multilayer film according to any one of claims 1 or 2. **characterised in that** the exterior layer comprises 0.5 - 7.0 wt% modifier.

4. Multilayer film according to any one of claims 1 to 3. **characterised in that** the exterior layer comprises 0.5 - 4.0 wt%, preferably up to 3.0 wt% modifier.

5. Multilayer film according to any one of claims 1 to 4, **characterised in that** the polypropylene composition comprises more than 80 wt% of the propylene random copolymer and up to 20 wt% of a copolymer which comprises a C₄-C₈-α-olefin and one of ethylene and propylene.

6. Use of a multilayer film according to any one of claims 1 to 5 for packaging applications.

7. Film forming polymer composition for the production of a multilayer film according to any one of claims 1 to 6, comprising .
90 - 99.9 wt% of a polypropylene composition, which is comprised of a propylene' random copolymer containing
2 - 18 wt% of at least one of ethylene or a C₄-C₈ α-olefin and less than 98 wt% propylene, and
0.1 -10.0 wt% of a modifier, which consists of a propylene homopolymer having an MFR > 100 g/10 min (230 °C. 2.16 kg).

8. Film forming polymer composition according to claim 7, **characterised in that** the polypropylene composition comprises more than 80 wt% of the propylene random copolymer and up to 20 wt% of a copolymer which comprises a C₄-C₈-α-olefin and one of ethylene and propylene.

## Patentansprüche

1. Orientierter Mehrlagenfilm, wobei wenigstens eine äußere Schicht umfasst:
90 - 99,9 Gew.-% einer Polypropylenzusammensetzung, die ein statistisches Propylencopolymer umfasst, das
2 - 18 Gew.-% von wenigstens einem aus Ethylen oder einem C₄-C₈-α-Olefin und weniger als 98 Gew.-% Propylen enthält, und
0,1 - 10,0 Gew.-% eines Modifikators, der aus einem Propylenhomopolymer mit einem MFR > 100 g/10 min (230 °C, 2,16 kg) besteht.

2. Mehrlagenfilm gemäß Anspruch 1, **dadurch gekennzeichnet, dass** das Propylenhomopolymer einen MFR > 300 g/10 min, vorzugsweise 500 g/10 min, besonders bevorzugt >700 g/10 min besitzt.

3. Mehrlagenfilm gemäß einem der Ansprüche 1 oder 2, **dadurch gekennzeichnet, dass** die äußere Schicht 0,5 - 7,0 Gew.-% Modifikator umfasst.

4. Mehrlagenfilm gemäß einem der Ansprüche 1 bis 3, **dadurch gekennzeichnet, dass** die äußere Schicht 0,5 - 4,0 Gew.-%, bevorzugt bis zu 3,0 Gew.-% Modifikator umfasst.

5. Mehrlagenfilm gemäß einem der Ansprüche 1 bis 4, **dadurch gekennzeichnet, dass** die Polypropylenzusammensetzung mehr als 80 Gew.-% des statistischen Copolymers und bis zu 20 Gew.-% eines Copolymers umfasst, wobei das Copolymer ein C₄-C₈-α-Olefin und eines gewählt aus Ethylen und Propylen umfasst.

6. Verwendung eines Mehrlagenfilms gemäß einem der Ansprüche 1 bis 5 für Verpackungsanwendungen.

7. Filmbildende Polymerzusammensetzung für die Herstellung eines Mehrlagenfilms gemäß einem der Ansprüche 1 bis 6, die umfasst:
90 - 99,9 Gew.-% einer Polypropylenzusammensetzung, die ein statistisches Propylencopolymer umfasst, das
2 - 18 Gew.-% von wenigstens einem aus Ethylen oder einem C₄-C₈-α-Olefin und weniger als 98 Gew.-% Propylen enthält, und
0,1 - 10,0 Gew.-% eines Modifikators, der aus einem Propylenhomopolymer mit einem MFR > 100 g/10 min (230 °C, 2,16 kg) besteht.

8. Filmbildende Polymerzusammensetzung gemäß Anspruch 7, **dadurch gekennzeichnet, dass** die Polypropylenzusammensetzung mehr als 80 Gew.-% eines statistischen Propylencopolymers und bis zu 20 Gew.-% eines Copolymers umfasst, wobei das Copolymer ein C₄-C₈-α-Olefin und eines gewählt aus Ethylen und Propylen umfasst.

## Revendications

1. Film orienté multicouche, où au moins une couche extérieure comprend de 90 à 99,9 % en poids d'une composition de polypropylène, qui est constituée d'un copolymère aléatoire de propylène contenant :
2 à 18 % en poids d'au moins l'un parmi l'éthylène et une α-oléfine en C₄ à C₈ et
moins de 98 % en poids de propylène, et
0,1 à 10,0 % en poids d'un modificateur qui consiste en un homopolymère de propylène ayant un MFR > 100 g/10 min (230 °C, 2,16 kg).

2. Film multicouche selon la revendication 1,
**caractérisé en ce que** l'homopolymère de propylène a un MFR > 300 g/10 min, de préférence 500 g/10 min, plus préférablement > 700 g/10 min.

3. Film multicouche selon l'une quelconque des revendications 1 et 2, **caractérisé en ce que** la couche extérieure comprend de 0,5 à 7,0 % en poids de modificateur.

4. Film multicouche selon l'une quelconque des revendications 1 à 3, **caractérisé en ce que** la couche extérieure comprend de 0,5 à 4,0 % en poids, de préférence jusqu'à 3,0 % en poids de modificateur.

5. Film multicouche selon l'une quelconque des revendications 1 à 4, **caractérisé en ce que** la composition de polypropylène comprend plus de 80 % en poids du copolymère aléatoire de propylène et jusqu'à 20 % en poids d'un copolymère qui comprend une α-oléfine en C₄ à C₈ et l'un parmi l'éthylène et le propylène.

6. Utilisation d'un film multicouche selon l'une quelconque des revendications 1 à 5 pour des applications d'emballage.

7. Composition de polymère filmogène pour la production d'un film multicouche selon l'une quelconque des revendications 1 à 6, comprenant .
90 à 99,9 % en poids d'une composition de polypropylène, qui est constituée d'un copolymère aléatoire de propylène contenant :
2 à 18 % en poids d'au moins l'un parmi l'éthylène et une α-oléfine en C₄ à C₈ et
moins de 98 % en poids de propylène, et
0,1 à 10,0 % en poids d'un modificateur, qui consiste en un homopolymère de propylène ayant un MFR > 100 g/10 min (230 °C, 2,16 kg).

8. Composition de polymère filmogène selon la revendication 7, **caractérisée en ce que** la composition de polypropylène comprend plus de 80 % en poids du copolymère aléatoire de propylène et jusqu'à 20 % en poids d'un copolymère qui comprend une α-oléfine en C₄ à C₈ et l'un parmi l'éthylène et le propylène.
